# EUROPEAN PATENT SPECIFICATION

(11) **EP 3 049 650 B1**
(45) Date of publication and mention of the grant of the patent: **17.04.2019**
(21) Application number: 14844415.1
(22) Date of filing: 05.09.2014
(51) Int. Cl.: F02B 37/00, F02B 37/22, F02M 26/00, F16K 15/04, F02B 37/18, F16K 17/04, F16K 15/18, F16K 17/06

(54) **BALL TYPE PRESSURE RELIEVING ACTUATOR FOR USE WITH TURBOCHARGERS**
KUGELFÖRMIGES DRUCKENTLASTUNGS-STELLGLIED ZUR VERWENDUNG MIT TURBOLADERN
ACTIONNEUR DE DÉCOMPRESSION DE TYPE À BILLE À UTILISER AVEC DES TURBOCOMPRESSEURS

(30) Priority: 10.09.2013 US 201361875829 P
(43) Date of publication of application: 03.08.2016
(73) Proprietor: Borgwarner Inc., Auburn Hills, MI 48326 (US)
(72) Inventor: ALEXANDER, James, Harrogate HG3 5PU (GB); ELMSLIE, John, Bradford BD10OTR (GB); CHAGGAR, Sanjit, Bradford West Yorkshire BD74DR (GB); WILLIAMS, James, Cleckheaton BD19 4BG (GB); FINLEY, James, Otley Yorkshire LS21 3BZ (GB)
(74) Representative: Peterreins Schley
(86) International application number: PCT/US2014/054189
(87) International publication number: WO 2015/038414

(56) References cited:
- EP-A1- 2 067 956
- WO-A1-2008/040907
- DE-A1- 19 853 391
- DE-A1-102010 041 841
- US-A- 2 351 873
- US-A- 2 415 258
- US-A- 4 236 376
- US-A1- 2004 159 291
- US-A1- 2007 089 707
- US-A1- 2009 183 507
- US-A1- 2013 092 134
- US-B2- 7 165 401

## Description

### FIELD OF THE INVENTION

The invention relates to a turbocharger with an improved waste gate valve and more particularly, to an improved waste gate valve having a ball type valve member and a pressure relieving actuator, which facilitates the flow of exhaust gases.

### BACKGROUND OF THE INVENTION

Turbochargers are provided on an engine to deliver air to the engine intake at a greater density than would be possible in a normal aspirated configuration. This allows more fuel to be combusted, thus boosting the engine's horsepower without significantly increasing engine weight.

Generally, turbochargers use the exhaust flow from the engine exhaust manifold, which enters the turbine housing at a turbine inlet, to thereby drive a turbine wheel, which is located in the turbine housing. The turbine wheel is affixed to one end of a shaft, wherein the shaft drives a compressor wheel mounted on the other end of the shaft. As such, the turbine wheel provides rotational power to drive the compressor wheel and thereby drive the compressor of the turbocharger. This compressed air is then provided to the engine intake as referenced above. In designing the turbine stage, selection of the turbine stage components is made relative to a preferred performance point. In a simple uncontrolled fixed-nozzle turbocharger system, an uncontrolled turbocharger is designed so that optimal performance is reached at high engine speeds. However, at other speeds the turbocharger provides suboptimal boost or air volume to the engine.

Controlled turbochargers provide improved performance, in that the turbine optimal operating point is already reached at low or medium engine speeds. Generally in a controlled system, when the flow rate of exhaust gases increases and the turbocharging pressure becomes too high, part of the exhaust gases are discharged into the surrounding atmosphere through a wastegate so as to bypass the turbine.

Typically, the exhaust gas flows through a volute defined within the turbine housing or casing. Further, a wastegate passage is also provided which is separated from the volute by an intermediate wall. To provide for wastegate flow, a wastegate port is provided in the wall which port is controlled by a wastegate valve.

The wastegate valve is selectively openable and closable during operation of the turbocharger. In one known wastegate valve, a flap type valve is provided which has a valve body having a valve face, which faces toward and abuts against a valve seat when the valve body is in a closed position. The valve face and an opposing face of the valve seat typically conform to each other and have rigid, complementary shapes, which are intended to provide a tight seal. This waste gate valve typically moves between open and closed positions in response to a mechanical actuator. However, this valve design may not accommodate fluctuations in exhaust gas pressure, which can affect turbocharger performance, since the exhaust gas pressure may increase or decrease and yet the waste gate valve has a fixed opening which does not react to such fluctuations such that pressure fluctuations also are present in the turbine wheel. Since the known waste gate valve may not vary in response to such fluctuations, the pressure fluctuations can affect turbocharger performance.

In this regard, EP 2 067 956 A1 discloses a turbocharger having an exhaust gas inlet and a turbine. An exhaust gas channel may be connected to the exhaust gas inlet of the turbocharger. In the exhaust gas system a valve may be provided that has a valve member. The valve may regulate exhaust gas directed to the turbine. The valve position may be controlled in response to a characteristic indicative of charge pressure of combustion air. Furthermore, the document discloses a method for regulating the pressure of charged air delivered by a turbocharger of an internal combustion engine. The method may include regulating the exhaust gas that is directed to the turbine of the turbocharger in response to a characteristic indicative of a charge pressure of charged combustion air. In another aspect, a valve for regulating exhaust gas directed to the turbine may be provided.

WO 2008/040907 A1 relates to a linear actuating device for the shut-off element of a safety valve particularly of a turbo-compressor, capable of occupying a closed position, said device comprising an electromagnetic linear actuator comprising a moving part intended to be connected to the shut-off element and to exert a closure force dependent in particular on a control current. The linear actuating device comprises a return spring inserted between the moving part and the shut-off element and has a compression force ranging between the closure force of the actuator when powered by a control current and the force supplied by the actuator when no longer powered by a control current so that the spring can, when the shut-off element is in the closed position and the actuator is no longer powered with a control current, exert a return force stronger than the force applied by the actuator.

DE 10 2010 041 841 A1 discloses an exhaust gas treatment arrangement having an exit gas line, wherein the exit gas line has a unit for producing a pressure difference. A bypass path is arranged such that a partition of the exhaust gas flow is provided between the exit gas line and the bypass path by an electronic-control-free medium at an operation of an internal-combustion engine. The unit has a turbine of a supercharger.

### SUMMARY

It is an object of the invention to provide a wastegate valve assembly, which overcomes disadvantages with known wastegate valves by damping pressure fluctuations in the exhaust gas and self-compensating for such fluctuations.

The invention relates to an improved wastegate valve assembly for a turbocharger, which provides more efficient flow of the exhaust gas through the wastegate port and the wastegate passage. More particularly as to the wastegate valve, the valve includes a ball type valve member, which is movable into and out of engagement with an annular valve insert, which valve insert defines a valve seat. The valve member is biased by a valve spring or other biasing member toward the closed position in engagement with the valve seat.

The wastegate valve assembly also includes a spring-biased piston, which biases the valve member to the closed position wherein the piston pushes the ball into closed engagement with the seat. While the piston normally closes the valve member, a pressure source is operable to selectively drive the piston away from the ball so that the valve member is acted upon solely by the valve spring. As such, the valve spring is light enough such that exhaust gas pressure can overcome
the closing force of the valve spring and move the ball away from the seat to initiate the waste gate flow.

In this regard, the valve spring defines a preset closing force that allows the valve member to open if the exhaust pressure exceeds the preset closing force. Due to the spring characteristics, the spring load defines a variable closing force, which allows the valve opening to automatically move and self-adjust in response to pressure fluctuations. Therefore, a controlled portion of exhaust gas may flow through the wastegate passage, which wastegate flow in turn flows to a turbine outlet so as to bypass the turbine. Since the valve member is spring-biased, fluctuations in exhaust gas pressure can automatically move the valve member to increase the valve opening and increase the exhaust gas flow therethrough so that the inventive valve can readily accommodate pressure fluctuations in the exhaust gas and dampen pressure fluctuations reaching the turbine wheel. As such, the valve member provides self-compensating adjustment of the flow through the valve. To close the valve, the pressure source may be operated to remove the pressure from the piston and allow the piston to move the valve member back to the closed position in response to a piston spring associated therewith. Since the piston is spring biased to a closed position by its respective piston spring, this also generates a piston closing force in combination with the closing force of the valve spring. In this configuration, the total closing force might still be overcome if a large enough exhaust gas pressure is present.

Other objects and purposes of the invention, and variations thereof, will be apparent upon reading the following specification and inspecting the accompanying drawings.

### BRIEF DESCRIPTION OF THE DRAWINGS

Figure 1 is a cut-away, pictorial view of a representative turbocharger.
Figure 2 is a cross-sectional side view of an inventive wastegate valve in a closed condition.
Figure 3 is an isometric view of the wastegate valve in the closed condition.
Figure 4 is an isometric view of the waste gate valve in an open condition.
Figure 5 is a cross-sectional isometric view of the wastegate valve in the closed condition.
Figure 6 is a cross-sectional isometric view of the wastegate valve in the open condition.
Figure 7 is a cross-sectional side view of a simplified waste gate valve without piston assembly not being part of the invention.

Certain terminology will be used in the following description for convenience and reference only, and will not be limiting. For example, the words "upwardly", "downwardly", "rightwardly" and "leftwardly" will refer to directions in the drawings to which reference is made. The words "inwardly" and "outwardly" will refer to directions toward and away from, respectively, the geometric center of the arrangement and designated parts thereof. Said terminology will include the words specifically mentioned, derivatives thereof, and words of similar import.

### DETAILED DESCRIPTION

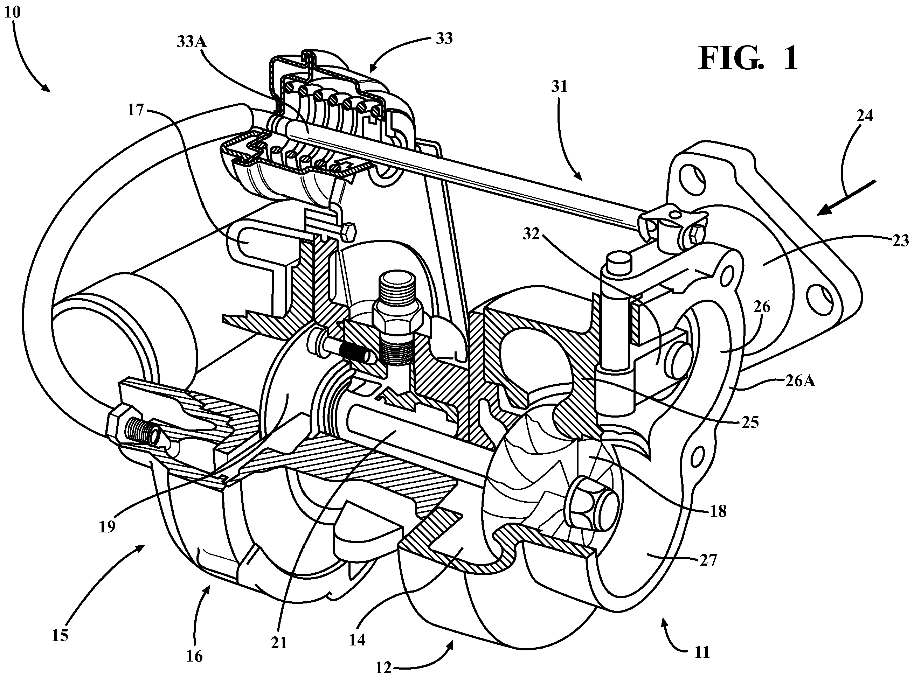

Referring to the cut-away view of Figure 1, a turbocharger 10 is shown which includes a turbine 11 that defines a turbine housing or casing 12 having a volute 14 extending circumferentially therein. Turbocharger 10 further includes a compressor 15 which is provided in combination with the turbine 11 in a conventional manner. The compressor 15 includes a compressor housing 16 and a compressor volute 17.

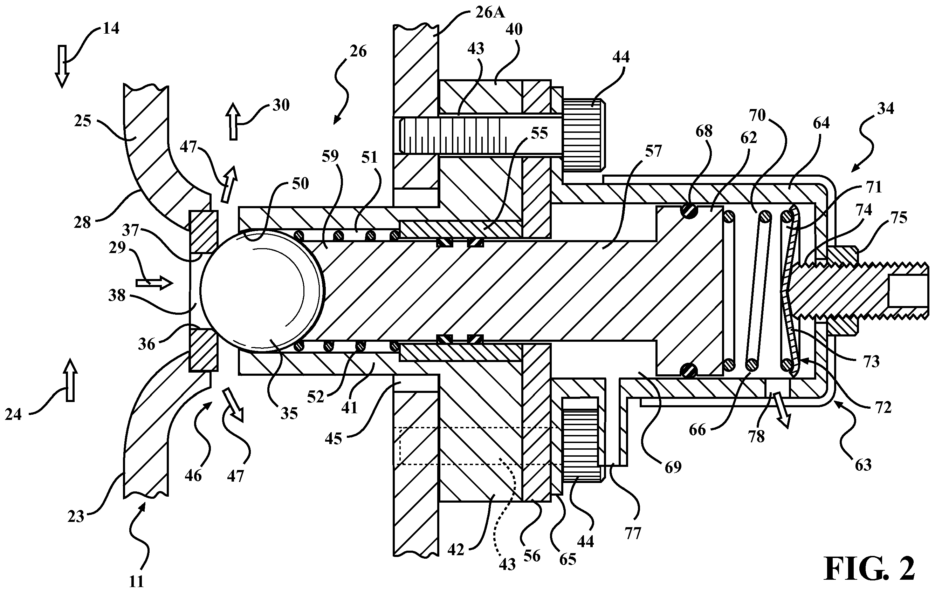

The turbocharger 10 has the basic combination of the turbine 11 and the compressor 15, which respectively include a turbine wheel 18 and a compressor wheel 19 that are rotatably connected by a shaft 21. Figure 1 illustrates a representative turbocharger 10, which is known, while Figure 2 illustrates an improved waste gate configuration, which represents an improvement to the turbocharger 10 of Figure 1. Common components in Figures 1 and 2 are designated with common reference numerals.

As seen in Figures 1 and 2, the turbine 11 is supplied with exhaust gas through the turbine inlet 23. The turbine inlet 23 defines an exhaust gas passage through which engine exhaust gas flows in a flow direction 24, which extends circumferentially into the turbine volute 14. The volute 14 further has an intermediate wall 25, which divides the volute 14 from a wastegate passage 26, which discharges into the turbine outlet 27. The wastegate passage 26 is defined on the inside by the wall 25 and on the outside by an exterior passage wall 26A.

More particularly as to Figure 2, to divert a portion of the exhaust gas flow from the turbine inlet 23 during operation of the turbocharger 10, the wall 25 includes a wastegate port 28, which defines a flow direction 29 that is transverse to the direction of inlet flow 24. This flow direction 29 is also transverse to the primary flow direction 30 extending through the wastegate passage 26.

The flow of exhaust gas flows from the inlet 23 through the exhaust gas passage to both the volute 14 and the wastegate passage 26 wherein the flow directions 24 and 30 are generally parallel to each other, at least in the region of the wastegate port 28. The wastegate port 28 opens perpendicular to or substantially at a right angle to these flow directions 24 and 30.

To provide for a controlled wastegate flow, the wastegate port 28 in the known turbocharger of Figure 1 is controlled by a wastegate valve assembly 31, which includes a wastegate valve 32 that seats within the port 28 and is selectively openable and closable during operation of the turbocharger 10.

As seen in Figure 1, the wastegate valve 32 is shown in the closed position wherein the exhaust gas is routed into the volute 14 through the turbine inlet 23 and this flow is restricted to the volute 14 due to the closed condition of the wastegate valve 32. The conventional valve 32 also is pivotable to an open condition wherein exhaust gas now is flowable into the wastegate passage 26. The wastegate valve 32 is operated by an actuator assembly 33 (Figure 1), which includes an actuator rod 33A that pivots the wastegate valve 32 so as to selectively open and close the wastegate port 28 and thereby control a flow of a portion of the exhaust gas into the wastegate passage 26. Therefore, a controlled portion of exhaust gas may flow through the wastegate passage 26 to the turbine outlet 27, thereby bypassing the turbine 12.

Referring to Figure 2, the invention relates to an improved wastegate valve assembly 34, which provides more efficient flow of the exhaust gas through the wastegate port 28 and the wastegate passage 26. More particularly as to the wastegate valve assembly 34 shown in Figure 2, this valve assembly 34 includes a spherical ball type valve member 35, which is movable into and out of engagement with an annular valve insert 36 that defines a valve seat 37 within the wastegate port 28. The valve member 35 can reciprocate linearly away from the valve seat 37 and then toward the valve seat 37 so as to open and close the wastegate port 28.

The valve insert 36 is shaped as an annular ring formed of a suitable material so as to snugly contact the valve member 35 in the closed condition. The valve insert 36 fits into an annular channel formed in the wall 25 in surrounding relation to the wastegate port 28. A bore 38 defines an extension of the port 28 wherein the inner diameter of the bore 38 is configured to sealingly receive the valve member 35.

The valve member 35 preferably is formed out of ceramic and has a spherical shape. Other geometric shapes may be provided so long as one side of the valve member 35 can snugly fit partially within the insert bore 38 to prevent the passage of exhaust gas through the wastegate port 28 and into the wastegate passage 26. The valve member 35 is formed as a separate component so that it can float axially to open and close the valve assembly 34.

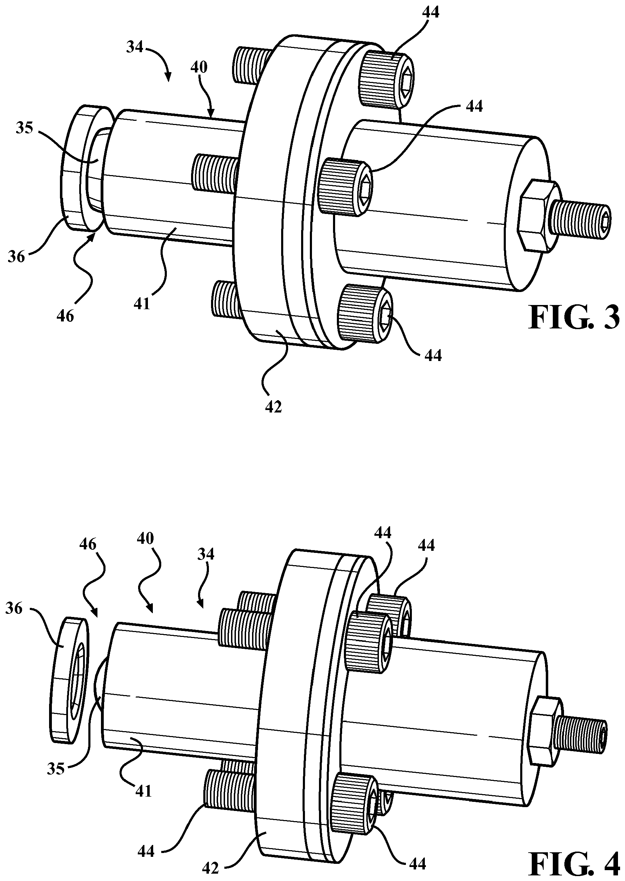

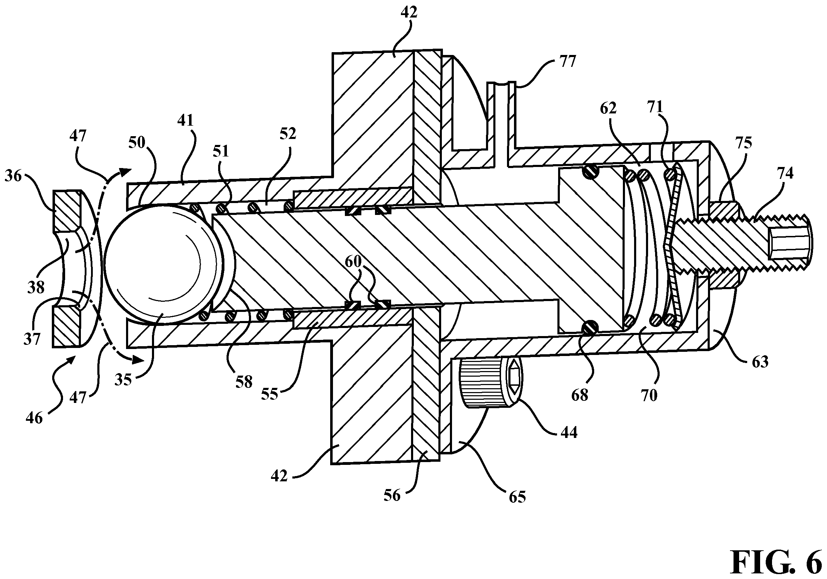

The valve assembly 34 includes a hollow valve housing 40, which mounts to the passage wall 26A as seen in Figure 2. The valve housing 40 (Figures 2-5) comprises a cylindrical valve cup 41, which receives the valve member 35, and an annular mounting flange 42, which includes fastener bores 43 that allow attachment of the valve housing 40 to the passage wall 26A by fasteners 44. When the valve housing 40 is mounted in place, the valve cup 41 projects into the wastegate passage 26 through a mounting bore 45 (Figure 2) formed in the passage wall 26A. The terminal end of the valve cup 41 is aligned with wastegate port 28 in close, but axially spaced relation with the valve insert 36. As such, an annular valve passage 46 is defined between the valve cup 41 and insert 36 through which exhaust gas can flow as indicated by reference arrows 47 in Figures 2 and 6. When the valve member 35 is seated in the valve insert 36 (see Figures 2, 3 and 5), the valve passage 46 is closed, and when the valve member 35 is lifted off of the valve insert 36 (see Figures 4 and 6), the valve passage 46 is open wherein the exhaust gas can flow therethrough along path 47 in a wastegated condition.

The terminal end or nose of the valve cup 41 includes an annular retention lip 50, which constricts the interior diameter of the valve cup 41 so that it is smaller than the outer diameter of the valve member 35, and thereby captures the valve member 35 within an interior chamber 51 of the valve cup 41. The chamber 51 includes a valve biasing member 52 preferably formed as a coil spring disposed in compression within the chamber 51. The valve biasing member or valve spring 52 generates a closing force, which normally biases the valve member 35 to the closed condition but permits the valve member 35 to open in response to exhaust gas pressures which exceed the total closing force acting on the valve member 35.

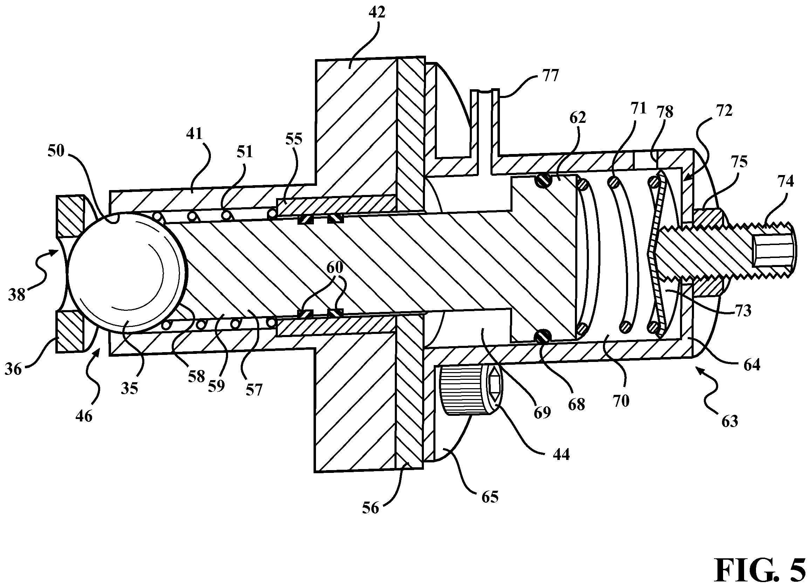

The valve cup 41 also includes a sealing ring 55 which fits into an outer open end of the valve cup 41 in an axially fixed position. The valve spring 52 is positioned in compression between the valve member 35 on an inner side, and the sealing ring 55 on an outer side. The sealing ring 55 includes an internal bore therethrough and is held in place by a cover plate 56, which fits over the mounting flange 42 and traps the sealing ring 55 axially within the chamber 51 as seen in Figures 2 and 5.

To adjust and set the total closing force acting on the valve member 35, the waste gate valve assembly 34 also includes a spring-biased piston 57, which normally biases the valve member 35 to the closed position wherein the valve member 35 is in closed, sealing engagement with the valve seat 37. The inner end of the piston 57 includes a concave driving face 58, which conforms to the spherical valve member 35 and contacts said member 35 to push the valve member 35 to the closed position seen in Figures 2 and 5. The piston 57 includes a reduced diameter piston body 59, which extends through the sealing ring 55 and is sealed by annular gaskets 60. As such, exhaust gas can flow into the chamber 51 when the valve assembly 34 is open but cannot leak past the sealing ring 55 and its gaskets 60.

The outer end of the piston body 59 includes a larger diameter piston head 62, which reciprocates within an external, piston housing 63. The piston housing 63 includes a cylindrical piston-receiving body 64, and an annular mounting flange 65, which is secured in place by fasteners 44. As such, the cup mounting flange 42, the cover plate 56, and piston mounting flange 65 are sandwiched together and attached to the wastegate passage wall 26A by the above-described fasteners 44. In this manner, the valve assembly components are held together, and the valve assembly 34 removably mounts to the passage wall 26A. As an alternative to fasteners 44, the valve assembly 34 can be mounted to the passage wall 26A by other means such as threads provided on the cup 41, which threadedly engage the wall passage 45.

The body 64 of the piston housing 63 receives the piston head 62, which reciprocates axially within the piston chamber 66. The piston head 62 has an annular gasket 68, which seals the outer diameter of the piston head 62 and sealingly subdivides the piston chamber 66 into an inboard pressure chamber 69 and an outboard spring chamber 70.

The spring chamber 70 includes a piston biasing member 71, preferably formed as a biasing spring 71 disposed in compression. The biasing spring 71 defines an inwardly-directed closing force driving the piston 57 toward the valve member 35. As such, when the piston 57 contacts the valve member 35 (Figures 2 and 5), an additional closing force acts on the valve member 35 in combination with the valve biasing member 52 to contribute to the total closing force acting on the valve member 35. Preferably, the total closing force is of sufficient magnitude so as to keep the valve member 35 in the closed condition during turbocharger operation. This maximum closing force typically exceeds any opening force generated by the exhaust gas pressure acting outwardly on the valve member 35 through the wastegate port 28. However, it will be understood that the valve member 35 still is movable to the open condition in the unexpected condition where the exhaust gas opening force exceeds the maximum total closing force generated by the valve and piston springs 52 and 71.

The closing force generated by the piston spring 71 is adjustable and can be increased and decreased by a spring adjuster 72 seen in Figures 2 and 5. In this regard, the spring adjuster 72 comprises a spring cup 73 and a threaded shaft 74. The spring cup 73 is disc-shaped and seats the outboard end of the piston spring 71. The threaded shaft 74 is threadedly engaged with a stationary boss 75 on the piston housing 63. The shaft 74 is manually rotatable so as to be driven inwardly into the piston housing 63 or outwardly, which thereby adjusts the amount of compression present in the piston spring 71. As a result, the closing force generated by the piston spring 71 can be varied or adjusted by the adjuster 72.

Normally, the piston spring 71 drives the piston 57 inwardly to hold the valve member 36 in the closed position of Figures 2, 3 and 5. To permit ready opening of the valve member 36 during exhaust gas flow, the piston 57 is drivable outwardly to release the valve member 35 and
permit the valve member 35 to open and close. To drive the piston 57, the inboard pressure chamber 69 includes an inlet fitting 77 that receives pressurized gas or other fluid from a controlled pressure source. A discharge port 78 is provided for the spring chamber 70, wherein the discharge port 78 opens to ambient environment and allows the air in the spring chamber 70 to flow in and out of the spring chamber 70 as the piston 57 moves inwardly and outwardly. When the pressure chamber 69 is pressurized, the piston 57 is driven outwardly to an open position as shown in Figure 6. In this position, the piston driving face 58 is spaced axially from the outer surface of the valve member 35. When the pressure source is turned off and the pressure chamber 69 is depressurized, the piston 57 moves back to the closed position of Figure 5 in response to the closing force of the spring 71. When the piston 57 is moved to the open position (Figure 6), the piston closing force no longer acts on the valve member 35. The valve member 35 is only acted upon by the closing force of the valve spring 52. When the exhaust gas pressure generates an opening force which exceeds this closing force, the valve member 35 moves axially out of the valve seat 37 and floats between the valve seat 37 and piston 57. The magnitude of the axial space between the valve member 35 and insert 36 varies depending upon the exhaust gas pressure wherein the valve spring 52 allows the size of the passage 46 to increase when the exhaust gas pressure increases and decrease when the pressure decreases. Hence, the amount of exhaust gas flow through passage 46 automatically adjusts in response to pressure fluctuations acting on the valve member 35. This is designed to reduce pressure fluctuations flowing to the turbine wheel, since an increase in pressure at the wastegate valve 34 will open the valve member 35 farther and allow more wastegate flow to reduce a pressure increase. Conversely, a reduction in exhaust pressure will reduce the wastegate flow and allow more consistent flow to the turbine wheel. As such, the valve 34 provides self-compensating adjustment of the gas flow through the valve 34 during pressure fluctuations.

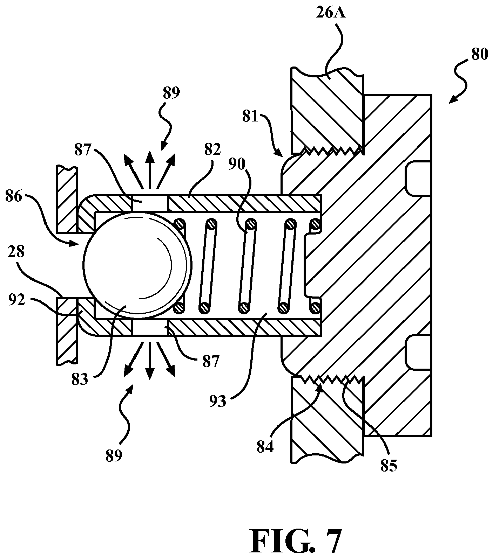

Referring to Figure 7, a simplified waste gate valve not being part of the invention is shown which does not include a piston assembly associated with the valve assembly 80. The valve assembly 80 includes a valve housing 81, which mounts to the passage wall 26A as seen in Figure 7. The valve housing 81 comprises a cylindrical valve cup 82, which receives a valve member 83, and a mounting flange 84, which can be threaded or fastened to the passage wall 26A. When the valve housing 81 is mounted in place, the valve cup 82 projects into the wastegate passage 26 through a mounting bore 85 (Figure 2) formed in the passage wall 26A. The terminal end of the valve cup 82 includes a valve passage 86 which is aligned with wastegate port 28 in close, sealed relation. Valve passages 87 are defined in the wall of the valve cup 82 through which exhaust gas can flow as indicated by reference arrows 89.

The valve member 83 is biased into the valve passage 86 by a valve spring 90 but may be displaced axially out of the valve passage 86 by exhaust gas pressure which exceeds the closing force generated by the valve spring 90 or other similar biasing member. If desired, this design may also include an adjustment device like the spring adjuster 72 described above which cooperates with the valve spring 90 to adjust and set the piston closing force acting on the valve member 83. In this regard, the outboard end of the spring 90 may be provided with a valve cup like cup 73 and shaft like shaft 74 so that rotation of the cup can move it inwardly and outwardly to vary the spring closing force generated by the valve spring 90.

When the valve member 83 is seated in the valve passage 86 in response to the spring closing force, the valve passage 86 is closed. When the valve member 83 is lifted out of the valve passage 86, the valve passage 86 is open wherein the exhaust gas can flow therethrough along discharge paths 89 in a wastegated condition.

The terminal end or nose of the valve cup 82 includes an annular retention lip 92, which constricts the interior diameter of the valve cup 82 so that it is smaller than the outer diameter of the valve member 83, and thereby captures the valve member 83 within an interior chamber 93 of the valve cup 82. Essentially, the lip 92 can define a valve seat in this configuration.

The chamber 93 includes the valve biasing member 90 preferably formed as a coil spring disposed in compression within the chamber 93. The valve biasing member or valve spring 90 generates the closing force, which normally biases the valve member 83 to the closed condition but permits the valve member 83 to open in response to exhaust gas pressures which exceed the total closing force acting on the valve member 83.

When the exhaust gas pressure generates an opening force which exceeds the spring closing force, the valve member 83 moves axially out of the vale passage 86 and floats in response to exhaust gas pressure. The magnitude of the axial space between the valve member 83 and the lip 92 varies depending upon the exhaust gas pressure wherein the valve spring 90 allows the size of the passage to increase when the exhaust gas pressure increases and decrease when the pressure decreases. Hence, the amount of exhaust gas flow through passage 86 automatically adjusts in response to pressure fluctuations acting on the valve member 83. This is designed to reduce pressure fluctuations flowing to the turbine wheel, since an increase in pressure at the wastegate valve 80 will open the valve member 83 farther and allow more wastegate flow to reduce a pressure increase. Conversely, a reduction in exhaust pressure will reduce the wastegate flow and allow more consistent flow to the turbine wheel. In this valve assembly 80, the valve assembly 80 is also able to provide self-compensating adjustment of the gas flow through the valve 80 during pressure fluctuations.

## Claims

1. A wastegate valve assembly (34, 80) for a turbocharger (10) having an exhaust gas passage, a wastegate passage (26), and a wastegate port (28) opening between said wastegate passage (26) and said exhaust gas passage to divert a portion of exhaust gas flow to said wastegate passage (26), said wastegate valve assembly (34, 80) comprising:
a valve housing (40,81) which is mountable proximate a wastegate port (28) and comprises a cylindrical valve cup (41,82), said valve cup (41,82) including a valve member (35,83), which is spherical and movable within said valve cup (41,82) for selectively opening and closing said wastegate port (28), said valve member (35,83) being biased toward said wastegate port (28) by a valve biasing member (52,90), which generates a valve closing force, and being displaceable axially away from said wastegate port (28) by exhaust gas pressure within said exhaust gas passage which exceeds the closing force generated by said valve biasing member (52,90), said valve member (35,83) being engageable with a valve seat (37) to selectively open and close said wastegate passage (26), wherein when exhaust gas pressure generates an opening force which exceeds said valve closing force, said valve member (35,83) moves axially out of said valve seat (37,92) to define a valve passage (46) therebetween, the size of said valve passage (46) depending upon the exhaust gas pressure wherein said biasing member (52,90) allows the size of said valve passage (46) to increase as the exhaust gas pressure increases and decrease as the exhaust gas pressure decreases; and
a spring-biased piston (57), which generates a piston closing force and normally biases said valve member (35) to the closed position, wherein
a terminal end of said valve cup (41,82) has an interior diameter smaller than an outer diameter of said valve member (35,83) to capture said valve member (35,83) within an interior chamber (51,93) of said valve cup (41,82), wherein
the valve seat (37) is defined by an annular valve insert (36) and wherein the terminal end of the valve cup (41) is aligned with the wastegate port (28) in close, but axially spaced from the annular valve insert (36).

2. The valve assembly (34, 80) according to Claim 1, wherein the amount of exhaust gas flow through said valve passage (46) automatically adjusts in response to pressure fluctuations of said exhaust gas pressure acting on said valve member (35,83).

3. The valve assembly (34, 80) according to Claim 2, wherein a pressure increase in said exhaust gas pressure at said wastegate valve (34, 80) will move said valve member (35) farther and allow more wastegate flow through the wastegate passage to reduce exhaust gas pressure within the exhaust gas passage.

4. The valve assembly (34, 80) according to Claim 1, wherein a pressure reduction in said exhaust gas pressure at said wastegate valve (34, 80) will allow said valve member (35) to move to reduce the wastegate flow.

5. The valve assembly (34, 80) according to Claim 1, wherein said wastegate valve (34, 80) includes and a mounting flange (84), which is mountable to a passage wall (26A).

6. The valve assembly (34, 80) according to Claim 1, wherein a terminal end of said valve cup (41,82) includes an annular retention lip (50,92), which constricts the interior diameter of the valve cup (41,82).

7. The valve assembly (34, 80) according to Claim 1, wherein an adjustment device (72) is provided which cooperates with said piston (57) to adjust and set said piston closing force acting on the valve member (35).

8. The valve assembly (34, 80) according to Claim 7, wherein said piston (57) normally pushes said valve member (35) to the closed position and includes a piston head (62), which is movable by pressure to displace said piston (57) away from said valve member (35).

9. The valve assembly (34, 80) according to Claim 1, wherein the piston (57) is configured to be selectively driven away from the valve member (35) by pressure so that the valve member (35) is acted upon solely by the valve biasing member (52).

10. The valve assembly according to Claim 1, wherein said piston (57) normally pushes said valve member (35) to the closed position wherein said piston closing force and said valve closing force are greater than the opening force generated by exhaust gas pressure.

11. The valve assembly according to Claim 10, wherein said piston (57) normally pushes said valve member (35) to the closed position and is movable by fluid pressure to displace said piston (57) away from said valve member (35) to allow valve opening in response to exhaust gas pressure.

12. The valve assembly (34, 80) according to Claim 1, wherein the piston (57) is configured to act an additional closing force on the valve member (35) in combination with the valve biasing member (52) to contribute to a total closing force acting on the valve member (35), when the piston (57) contacts the valve member (35).

## Patentansprüche

1. Wastegate-Ventilanordnung (34, 80) für einen Turbolader (10), der einen Abgaskanal, einen Wastegate-Kanal (26) und einen Wastegate-Anschluss (28) aufweist, der sich zwischen dem Wastegate-Kanal (26) und dem Abgaskanal öffnet, um einen Teil des Abgasstroms zu dem Wastegate-Kanal (26) umzuleiten, wobei die Wastegate-Ventilanordnung (34, 80) Folgendes umfasst:
ein Ventilgehäuse (40, 81), das nahe einem Wastegate-Anschluss (28) befestigbar ist und einen zylindrischen Ventilbecher (41, 82) umfasst, wobei der Ventilbecher (41, 82) ein Ventilelement (35, 83) enthält, das kugelförmig und in dem Ventilbecher (41, 82) bewegbar ist, um den Wastegate-Anschluss (28) gezielt zu öffnen und zu schließen, wobei das Ventilelement (35, 83) von einem Ventilvorspannelement (52, 90), das eine Ventilschließkraft erzeugt, in Richtung zu dem Wastegate-Anschluss (28) vorgespannt und durch einen Abgasdruck in dem Abgaskanal, der die von dem Ventilvorspannelement (52, 90) erzeugte Schließkraft übersteigt, axial von dem Wastegate-Anschluss (28) weg verschiebbar ist, wobei das Ventilelement (35, 83) mit einem Ventilsitz (37) in Eingriff gebracht werden kann, um den Wastegate-Kanal (26) gezielt zu öffnen und zu schließen, wobei sich, wenn der Abgasdruck eine Öffnungskraft erzeugt, die die Ventilschließkraft übersteigt, das Ventilelement (35, 83) axial aus dem Ventilsitz (37, 92) bewegt, um zwischen denselben einen Ventilkanal (46) zu definieren, wobei die Größe des Ventilkanals (46) von dem Abgasdruck abhängt, wobei das Vorspannelement (52, 90) ermöglicht, dass die Größe des Ventilkanals (46) zunimmt, während der Abgasdruck höher wird, und abnimmt, während der Abgasdruck niedriger wird, und einen federvorgespannten Kolben (57), der eine Kolbenschließkraft erzeugt und normalerweise das Ventilelement (35) in die geschlossene Stellung vorspannt, wobei
ein abschließendes Ende des Ventilbechers (41, 82) einen Innendurchmesser aufweist, der kleiner als ein Außendurchmesser des Ventilelements (35, 83) ist, um das Ventilelement (35, 83) in einer Innenkammer (51, 93) des Ventilbechers (41, 82) zu halten, wobei
der Ventilsitz (37) durch einen ringförmigen Ventileinsatz (36) definiert ist und wobei das abschließende Ende des Ventilbechers (41) in enger, aber axial von dem ringförmigen Ventileinsatz (36) beabstandeter Position in einer Linie mit dem Wastegate-Anschluss (28) ausgerichtet ist.

2. Ventilanordnung (34, 80) nach Anspruch 1, wobei sich die Menge des Abgasstroms durch den Ventilkanal (46) in Reaktion auf Druckschwankungen des Abgasdrucks, die auf das Ventilelement (35, 83) einwirken, automatisch einstellt.

3. Ventilanordnung (34, 80) nach Anspruch 2, wobei eine Druckerhöhung des Abgasdrucks an dem Wastegate-Ventil (34, 80) das Ventilelement (35) weiter weg bewegt und einen stärkeren Wastegate-Strom durch den Wastegate-Kanal ermöglicht, um den Abgasdruck in dem Abgaskanal zu reduzieren.

4. Ventilanordnung (34, 80) nach Anspruch 1, wobei eine Druckverringerung des Abgasdrucks an dem Wastegate-Ventil (34, 80) ermöglicht, dass sich das Ventilelement (35) bewegt, um den Wastegate-Strom zu reduzieren.

5. Ventilanordnung (34, 80) nach Anspruch 1, wobei das Wastegate-Ventil (34, 80) einen Befestigungsflansch (84) umfasst, der an einer Kanalwand (26A) befestigbar ist.

6. Ventilanordnung (34, 80) nach Anspruch 1, wobei ein abschließendes Ende des Ventilbechers (41, 82) eine ringförmige Haltelippe (50, 92) umfasst, die den Innendurchmesser des Ventilbechers (41, 82) einschränkt.

7. Ventilanordnung (34, 80) nach Anspruch 1, wobei eine Einstellvorrichtung (72) vorgesehen ist, die mit dem Kolben (57) zusammenwirkt, um die auf das Ventilelement (35) einwirkende Kolbenschließkraft einzustellen und zu setzen.

8. Ventilanordnung (34, 80) nach Anspruch 7, wobei der Kolben (57) das Ventilelement (35) normalerweise in die geschlossene Stellung schiebt und einen Kolbenboden (62) umfasst, der durch Druck bewegbar ist, um den Kolben (57) von dem Ventilelement (35) weg zu verschieben.

9. Ventilanordnung (34, 80) nach Anspruch 1, wobei der Kolben (57) dazu ausgelegt ist, gezielt durch Druck von dem Ventilelement (35) weg getrieben zu werden, so dass eine Einwirkung auf das Ventilelement (35) ausschließlich durch das Ventilvorspannelement (52) erfolgt.

10. Ventilanordnung nach Anspruch 1, wobei der Kolben (57) das Ventilelement (35) normalerweise in die geschlossene Stellung schiebt, wobei die Kolbenschließkraft und die Ventilschließkraft größer als die von dem Abgasdruck erzeugte Öffnungskraft sind.

11. Ventilanordnung nach Anspruch 10, wobei der Kolben (57) das Ventilelement (35) normalerweise in die geschlossene Stellung schiebt und durch Flüssigkeitsdruck bewegbar ist, um den Kolben (57) von dem Ventilelement (35) weg zu verschieben und ein Öffnen des Ventils in Reaktion auf den Abgasdruck zu ermöglichen.

12. Ventilanordnung (34, 80) nach Anspruch 1, wobei der Kolben (57) dazu ausgelegt ist, eine zusätzliche Schließkraft auf das Ventilelement (35) in Kombination mit dem Ventilvorspannelement (52) auszuüben, um zu einer Gesamtschließkraft beizutragen, die auf das Ventilelement (35) einwirkt, wenn der Kolben (57) das Ventilelement (35) berührt.

## Revendications

1. Ensemble soupape de décharge (34, 80) pour un turbocompresseur (10) ayant un passage de gaz d'échappement, un passage de décharge (26) et un orifice de décharge (28) s'ouvrant entre ledit passage de décharge (26) et ledit passage de gaz d'échappement pour dévier une partie du flux de gaz d'échappement vers ledit passage de décharge (26), ledit ensemble soupape de décharge (34, 80) comprenant :
un boîtier de soupape (40, 81) qui peut être monté à proximité d'un orifice de décharge (28) et comprend une cuvette de soupape cylindrique (41, 82), ladite cuvette de soupape (41, 82) comprenant un élément de soupape (35, 83), qui est sphérique et mobile dans ladite cuvette de soupape (41, 82) pour ouvrir et fermer sélectivement ledit orifice de décharge (28), ledit élément de soupape (35, 83) étant sollicité vers ledit orifice de décharge (28) par un élément de sollicitation de soupape (52, 90), qui génère une force de fermeture de soupape, et pouvant être déplacé axialement à l'opposé dudit orifice de décharge (28) par une pression de gaz d'échappement dans ledit passage de gaz d'échappement qui dépasse la force de fermeture générée par ledit élément de sollicitation de soupape (52, 90), ledit élément de soupape (35, 83) pouvant venir en prise avec un siège de soupape (37) pour ouvrir et fermer sélectivement ledit passage de décharge (26), lorsque la pression de gaz d'échappement génère une force d'ouverture qui dépasse ladite force de fermeture de soupape, ledit élément de soupape (35, 83) se déplaçant axialement hors dudit siège de soupape (37, 92) pour définir un passage de soupape (46) entre eux, la taille dudit passage de soupape (46) dépendant de la pression de gaz d'échappement, ledit élément de sollicitation (52, 90) permettant à la taille dudit passage de soupape (46) d'augmenter lorsque la pression de gaz d'échappement augmente et de diminuer lorsque la pression de gaz d'échappement diminue ; et un piston sollicité par ressort (57), qui génère une force de fermeture de piston et sollicite normalement ledit élément de soupape (35) en position fermée,
une extrémité terminale de ladite cuvette de soupape (41, 82) ayant un diamètre intérieur inférieur au diamètre extérieur dudit élément de soupape (35, 83) pour capturer ledit élément de soupape (35, 83) dans une chambre intérieure (51, 93) de ladite cuvette de soupape (41, 82),
le siège de soupape (37) étant défini par un insert de soupape annulaire (36) et l'extrémité terminale de la cuvette de soupape (41) étant alignée avec l'orifice de décharge (28) à proximité, mais à distance axiale de l'insert de soupape annulaire (36).

2. Ensemble soupape (34, 80) selon la revendication 1, la quantité de flux de gaz d'échappement traversant ledit passage de soupape (46) s'ajustant automatiquement en réponse aux fluctuations de pression de ladite pression de gaz d'échappement agissant sur ledit élément de soupape (35, 83).

3. Ensemble soupape (34, 80) selon la revendication 2, une augmentation de pression dans ladite pression de gaz d'échappement au niveau de ladite soupape de décharge (34, 80) déplaçant ledit élément de soupape (35) plus loin et permettant un plus grand débit de décharge à travers le passage de décharge pour réduire la pression de gaz d'échappement dans le passage de gaz d'échappement.

4. Ensemble soupape (34, 80) selon la revendication 1, une réduction de pression dans ladite pression de gaz d'échappement au niveau de ladite soupape de décharge (34, 80) permettant audit élément de soupape (35) de se déplacer pour réduire le débit de décharge.

5. Ensemble soupape (34, 80) selon la revendication 1, ladite soupape de décharge (34, 80) comprenant une bride de montage (84), qui peut être montée sur une paroi de passage (26A).

6. Ensemble soupape (34, 80) selon la revendication 1, une extrémité terminale de ladite cuvette de soupape (41, 82) comprenant une lèvre de retenue annulaire (50, 92), qui rétrécit le diamètre intérieur de la cuvette de soupape (41, 82).

7. Ensemble soupape (34, 80) selon la revendication 1, un dispositif de réglage (72) étant fourni qui coopère avec ledit piston (57) pour ajuster et régler ladite force de fermeture du piston agissant sur l'élément de soupape (35).

8. Ensemble soupape (34, 80) selon la revendication 7, ledit piston (57) poussant normalement ledit élément de soupape (35) en position fermée et comprenant une tête de piston (62), qui est mobile par pression pour déplacer ledit piston (57) à l'opposé dudit élément de soupape (35).

9. Ensemble soupape (34, 80) selon la revendication 1, le piston (57) étant conçu pour être sélectivement entraîné à l'opposé de l'élément de soupape (35) par pression de sorte que l'élément de soupape (35) soit sollicité uniquement par l'élément de sollicitation de soupape (52).

10. Ensemble soupape selon la revendication 1, ledit piston (57) poussant normalement ledit élément de soupape (35) en position fermée, ladite force de fermeture de piston et ladite force de fermeture de soupape étant supérieures à la force d'ouverture générée par la pression de gaz d'échappement.

11. Ensemble soupape selon la revendication 10, ledit piston (57) poussant normalement ledit élément de soupape (35) en position fermée et étant mobile par pression de fluide pour éloigner ledit piston (57) dudit élément de soupape (35) pour permettre l'ouverture de soupape en réponse à la pression de gaz d'échappement.

12. Ensemble soupape (34, 80) selon la revendication 1, le piston (57) étant conçu pour exercer une force de fermeture supplémentaire sur l'élément de soupape (35) en combinaison avec l'élément de sollicitation de soupape (52) pour contribuer à une force de fermeture totale agissant sur l'élément de soupape (35), lorsque le piston (57) vient en contact avec l'élément de soupape (35).
